Europäisches Patentamt

(19) European Patent Office

Office européen des brevets

(11) Publication number: **0 093 012**
**B1**

(12) **EUROPEAN PATENT SPECIFICATION**

(45) Date of publication of patent specification: **30.07.86**

(21) Application number: **83302354.2**

(22) Date of filing: **26.04.83**

(51) Int. Cl.⁴: **F 16 L 9/14**

(54) **Filament wound interlaminate tubular attachment and method of manufacture.**

(30) Priority: **27.04.82 US 372426**

(43) Date of publication of application:
**02.11.83 Bulletin 83/44**

(45) Publication of the grant of the patent:
**30.07.86 Bulletin 86/31**

(84) Designated Contracting States:
**DE FR GB IT SE**

(56) References cited:
**GB-A-1 525 412**
**GB-A-2 097 090**
**US-A-4 185 472**
**US-A-4 187 135**
**US-A-4 236 386**

(73) Proprietor: **HERCULES INCORPORATED**
**Hercules Plaza**
**Wilmington Delaware 19899 (US)**

(72) Inventor: **Policelli, Frederick Joseph**
**5 Sunset Drive**
**Cumberland Maryland 21502 (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

Courier Press, Leamington Spa, England.

## Description

This invention relates to filament wound tubes adapted to be joined to other bodies through an insert carried by the body of the filament wound tube, especially to a hollow composite tube of filamentary material that is composed of glass, graphite, aramid, boron or other such filaments and a polymer matrix and that may be mechanically joined to a metallic end connection fitting or to other tubes which are of same or like configurations.

In the field of metal-to-composite joints, the connection of the metal fitting or the external structure to the filamentary composite tube has not been made in a manner as to take full advantage of the multiplicity of load transfer planes within the tube. Such cases of prior art are those where the fitting or external structure is bonded together with the composite tube through a singular plane being either internal or external to the fitting and where the singular plane is either uniform as a cylinder or non-uniform as a spline, knurled or otherwise interrupted for the purpose of increasing penetration of the fitting surface into the composite tube material. For example, see U.S. Patents 4,185,472; 4,187,135 and 4,236,386. The present invention takes full advantage of multiplicity of load transfer planes occurring between each layer of the composite tube by having intermediate shells of material located at each plane all of which carry the load to a second point of transfer.

According to the present invention, a hollow, filament wound tube includes an insert comprising a plurality of hollow, tubular load-bearing shells embedded between radially spaced layers of filament wound fibre of said filament wound tube, said shells having a longitudinal dimension less than that of said filament wound tube.

In certain embodiments of this invention, the shells are metal and extend axially beyond the end of the fibers of the filament wound tube for joining to the tube to similarly configured tubes. In other embodiments the shells are fully embedded within the filament wound tube for attaching the tube to another body. In variations of the former embodiments, the tubes are welded or fastened onto other tubes through the metal shell extensions. In variations of the latter embodiment, the middle or ends of the composite tube carry the shells for fastening the composite tube to another, the latter variation including flaring the ends to overlap the end of the joined tube. In still other variations of the former as well as latter embodiments, the shells abut against the composite end of spaced filament wound layers in being embedded in the filament wound tube or against cylindrical spacers carried between such spaced filament wound layers.

Figure 1 is a longitudinal view of a tube having typical end fittings which are internal and external threaded couplings. The tube is partially in section to depict positioning of metal shells in the tube in accordance with this invention.

Figure 2 shows schematically further detail of the welded connection and the layered construction of a tube body of this invention.

Figure 3 is an expanded cross-section detail of the tube end containing embedded shells of Figures 1 and 2 as it would be prior to fusion welding to an end fitting.

Figure 4 is a cross-section of an alternative shell embedment geometry in the end of a tube where all tube layers are made to pass into the embedment zone.

Figure 5 is a longitudinal view, partially cut away, of two tubes each of which contain embedded shells. The shells are joined by a fusion weld of the extended shells.

Figure 6 is a cross-section detail of the two tube ends depicted in Figure 5 which are joined directly by a fusion weld in the region of the extended shells.

Figure 7 is a longitudinal view, partially cut away of two tubes each of which contain embedded shells. The tubes are joined directly by radial pins through the extended shells.

Figure 8 is a cross-section detail of the two tube ends joined by radial pins through the extended shells as in Figure 7.

Figure 9 is a longitudinal view, partially cut away, of two tubes each of which contain embedded shells. The tube ends are joined by means of an intermediate coupling by radial pins through the shell embedments.

Figure 10 is a cross-section detail of the two tube ends joined through an intermediate coupling by radial pins through the shell embedments as in Figure 9.

Figure 11 is a longitudinal view, partially cut away, of an intermediate tube region which contains an internal bulkhead joined to the tube by radial pins through a shell embedded zone within the tube body.

Figure 12 is a cross-section detail of the intermediate tube region showing a portion of the bulkhead joined to the tube by radial pins through the shell embedded zone as in Figure 11.

Figure 13 is a longitudinal view, partially cut away, of two tube ends each of which contain embedded shells. The tubes are joined directly by radial pins through the shell embedments.

Figure 14 is a cross-section detail of the two tube ends which are joined directly by radial pins in the region of the shell embedments as in Figure 13.

Figure 15 illustrates a small size rocket motor case implementing aspects of this invention relating to fasteners.

Figure 16 illustrates a large size rocket motor case implementing aspects of this invention using both internal and external connectors.

Figure 17 illustrates use of this invention relative to sandwich constructed tubes.

Figures 18 and 19 illustrate this invention as applied to joining tubes with integral shells.

The invention has application where it is desirable to transfer torsional, bending and axial forces to an external or internal structural part from a composite tube containing the joined end fitting such as in a rocket motor casing, a fluid conveyance pipe, a pressurized fluid containment vessel , a torque transmitting shaft, and a load transmitting structural strut all of which employ a composite tube.

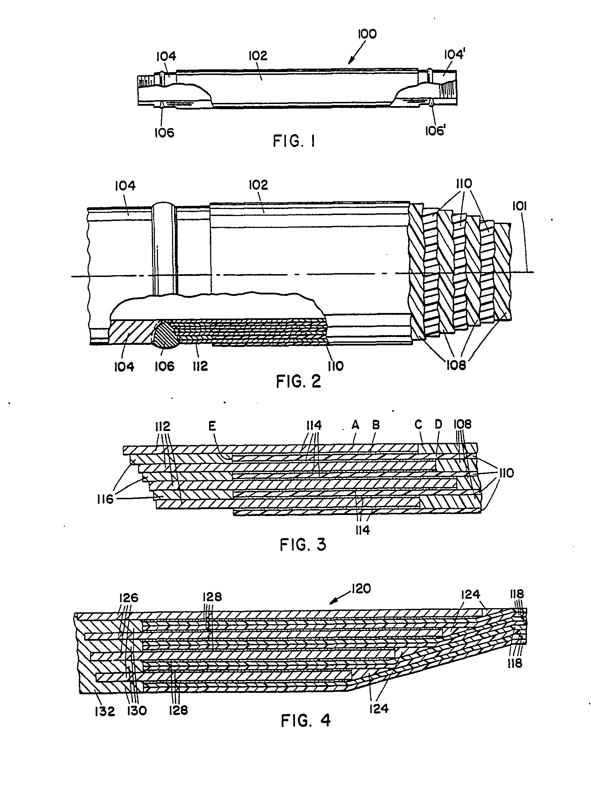

Taking up the elements of this invention shown specifically in the drawings, Figure 1 illustrates a pipe 100 which utilizes the present invention at both its ends. Tube 102 is a hollow cylinder fabricated using a multiplicity of composite layers where each layer contains such filaments as graphite, glass, aramid or boron and a polymer matrix such as epoxy or polyester resin. This tube body is lighter than steel and can be fabricated to exhibit high strength and rigidity by selective use of filament patterns in each of the layers. The pipe illustrated is employed in the conveyance of fluids. As such, end fittings, 104, 104' attached at the ends of tube 102 are for the purpose of connecting pipe 100 to other pipes. Each fitting is joined by respective fusion weld 106, 106' to respective metal sleeves which are embedded in the layered tube body as illustrated with greater detail in Figure 2.

The various layers of the tube body are shown in Figure 2 consisting of both circumferential layers 108 and helical layers 110. A helix angle of ±15° to the tube axis 101 is appropriate for this pipe application. Location of the cylindrical metal sleeves 112 are such as to occupy the circumferential layer position within the zone of the embedment part of which zone is shown more particularly in Figure 3. In this manner, the metal sleeves 112 provide the necessary hoop strength to the tube at its ends which is normally provided by the circumferential layers in the main composite body of the tube 102. In this manner also, the metal sleeves 112 are adjacent to the axial layers and transfer axial forces of the joint directly into the helical layers 110 by shear. Very thin film, cylindrical layers of adhesive 114 are used between the metal sleeves and the helical layers 110 to substantially reduce the magnitude of peak shear stresses which ordinarily occur, under load, within and at the ends between the metal and composite layers. Other metal sleeves, i.e. hollow cylindrical spacers 116 are used between the embedded sleeves to provide stability and resist internal pressure within the pipe.

Dimensions of the sleeve thicknesses and embedment lengths and the composite layer thicknesses are principally a function of the pipe diameters, desired internal fluid pressure and properties of the selected sleeve and layer material composition. An example of these dimensions for pipe 100, which has a 10 inch (25.4 cm) inside diameter, is required to contain an internal fluid pressure of 2000 psi (13.79 MPa), and is constructed of steel sleeves and graphite filament epoxy composite, is: a thickness for each of the metal sleeves 112 of 0.020 inch (0.51 mm);

thickness for each of the circumferential layers 108 of 0.024 inch (0.61 mm); a thickness of each of the adhesive layers 114 of 0.002 inch (0.051 mm); an average embedment length of 3.8 inches (9.65 cm) respectively measured along longitudinal axis 101 from between the end of the circumferential layers 108 and the end of the helical layers 110; a thickness of each of the helical layers 110 of 0.012 inches (0.3 mm); and each such helical layer has a filament orientation with respect to a line parallel to centre longitudinal axis 101 of between about ±15° (±0.26 rad).

Fabrication of a fluid conveyance pipe containing welded end fittings described above is performed in two general processes. The first general process is for the purpose of making the composite tube body together with the embedded sleeves at the ends. In this first process and considering Figures 2 and 3, a first metal sleeve (identified in Figure 3 as A) being of a solid hollow, open ended cylindrical shape or of a sheet formed into such cylindrical (or substantially cylindrical) shape and having the adhesive layer identified as B applied to it, is positioned on a filament winding mandrel. This is followed by the construction of the first tube body layer (the circumferential layer identified as C) which is circumferentially filament wound. Following further is the construction of a second filamentary layer (the helical layer identified as D) which is helically filament wound over the first layer and over the sleeve A in a normal fashion continuing over and around the end of the mandrel. This layer is first B-staged and then cut through location E and the end material of the filament wound layer is removed. The portion of the first process described to this point is repeated a number of time or in particular three times to construct the number of layers illustrated by Figures 1, 2 and 3. After completion of the last layer, the entire assembly is heated to thermally cure the resin matrix. After cooling, the mandrel is removed.

The second general process (again considering Figures 2 and 3) is for the joining end fitting 104 to the ends of the metal sleeves 112 that extend axially from tube 102 beyond helical layers 110. The process is performed in the normal fashion of fusion welding using several circumferential passes beginning from the inside of the cylindrical welded joint area to form fusion weld 106. During the process of welding, heat produced in the metal sleeves 112 is prevented from reaching the composite layers (especially helical layers 110) by employing a cooling zone about the layers by such means as water immersion or by a cooling jacket.

An alternative geometry for embedment of metal sleeves in a tube body is shown in Figure 4. In this construction, all of the fibrous composite layers 118 of the tube body 120 are taken into the embedment zone permitting a wider choice of axial angles of filaments in the layers. This embodiment can be employed in a fluid conveyance pipe having bending loads in addition to internal pressure loads and in structural members having bending and axial stiffness requirements. In this construction, cylindrical filler wedges 124 of circumferentially wound composite materials are used to provide a smooth transition for the tube body layers passing into the embedment zone. Fabrication of this alternate construction is similar to that described above.

In the embodiment of Figure 4, cylindrical metal sleeves 126 as in the embodiment of Figures 1, 2 and 3, have cylindrical adhesive layers which are depicted as 128. The adhesive layers 128 are applied during fabrication of the tube 120. The adhesive is a polymeric resin mixture containing a thixotropic agent and is applied by means of filming, rolling or spraying to a precisely controlled thickness. The adhesive cures during the heated cure process of making the composite tube. Upon completion of fabrication of the tube, spaced cylindrical sleeves 130 that are integral with an end fitting 132 are inserted respectively between each of the pairs of adjoining sleeves 126 as well as cylindrically adjacent the unpaired sleeve thereof as shown. The ends of the sleeves abut the respective ends of each adjacent pair of fibrous layers 118. The spacer sleeves 120 are braze welded together with metal sleeves 126 circumferentially about the tube of the embodiment illustrated in Figure 4.

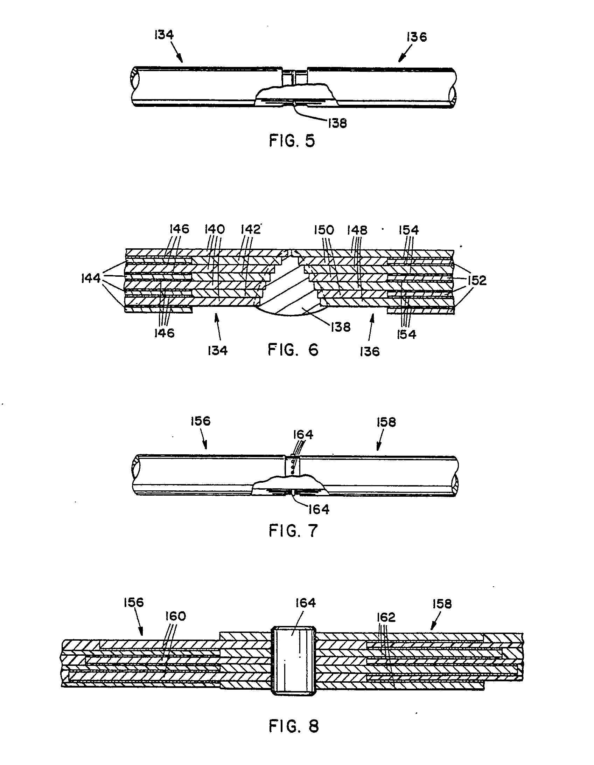

Figure 5 shows an alternative method of joining two tubes. Tubes 134, 136 join through a fusion weld 138. Each of tubes 134, 136 contains embedded metal sleeves seen better in Figure 6 which is a detail cross-section of this joint. The weld 138 is used to join the extended regions of the embedded sleeves of each tube directly and without the use of intermediate fittings. This method has application to the permanent joining of tubes where disassembly or unjoining is not necessary thereby decreasing cost of joining and decreasing the weight of the joint.

In Figure 6, tube 134 has cylindrical metal sleeves 140; cylindrical metal spacers 142 are respectively between the adjacent pairs of these cylindrical metal sleeves 140. Tube 134 also has helical layers of filaments, the helical layers shown as 144. Also helical layers 144 are bonded to the cylindrical metal sleeves through adhesive layers 146 in which the bonding is accomplished as discussed hereinbefore. Similarly, tube 136 has cylindrical metal sleeves 148 and cylindrical metal spacers 150 between pairs of them as shown. Also tube 136 similarly has helical layers of filaments in a hardened resin matrix, the helical layers shown as 152 bonded to cylindrical metal sleeves 148 through adhesive layers 154.

Figure 7 shows still another method of joining two substantially cylindrical tubes 156, 158. Tubes 156, 158 respectively contain embedded hollow, open ended, cylindrical metal sleeves 160 and 162 which are attached, by means of pins 164 as illustrated or by bolts or rivets. A detail cross-section of this joint is shown in Figure 8 illustrating the embedment construction of each of the two tubes and being similar to that initially described above. In this method, however, the sleeves 160 of tube 156 are located radially so as to be staggered relative to the sleeves 162 of the other tube 158 thereby permitting those of one to engage between those of the other. The pins 164, are inserted around the joint circumference. Pins 164 are placed through corresponding holes in each extended sleeve in order to transfer axial compression, axial tension or torsional loads between the sleeves 160 of tube 156 to or from the sleeves 162 of the tube 158. This method has application to the joining of tubes where disassembly or unjoining is necessary and does not require the use of an intermediate fitting.

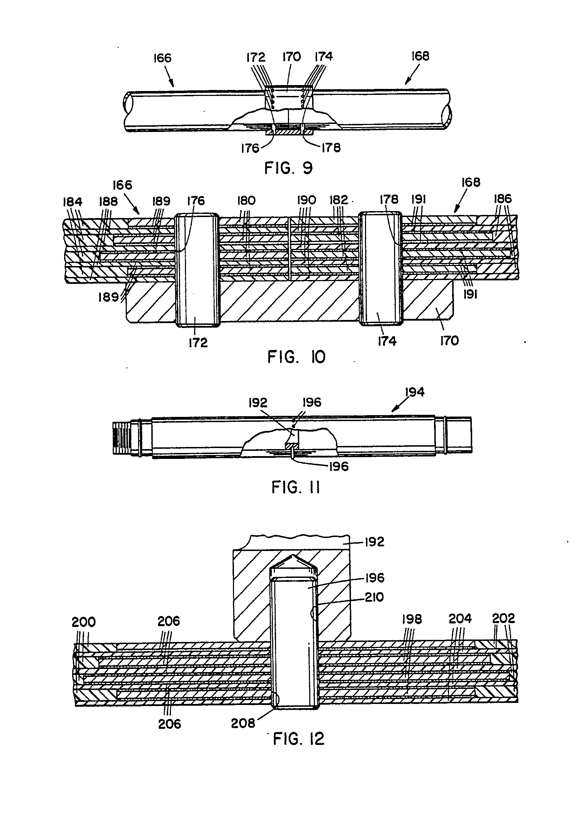

A modification within the present invention is shown in Figure 9 which illustrates two tubes 166, 168 being joined by means of cylindrical metal coupling 170. The coupling 170 is connected to each tube end by pins 172, 174 as shown or by bolts or rivets in the zone of embedded shells which attachment means extend through holes such as 176, 178 in the zone. This modification is simple in construction and requires an external fitting. Figure 10 shows this modification in greater detail. Cylindrical metal sleeves of tube 166 are identified as 180 and 182 in tube 168. Layers 184, 186 of filaments terminate against the respective ends of metal sleeves 180, 182. Layers 188, 190 co-terminate with respective metal sleeves 180, 182 at the end of tube 166, 168 and are bonded to metal sleeves by adhesive layers 189, 191.

A variation of this same modification wherein a pin connection is used in the embedded shell zone is shown in Figure 11. In this variation, an internal bulkhead is joined to the tube body and is for the purpose of providing separate pressure compartments as would be used for pressure regulation, throttling, and flow control of fluids in a pipe system.

In Figure 11 and as shown in greater detail in Figure 12, bulkhead 192 is attached within tube 194 by means of pins 196.

Tube 194 of Figures 11 and 12 has open ended cylindrical metal sleeves 198 terminating at filament wound layers 200 at a first end thereof and terminating at filament wound layers 202 at the second end thereof. Filamentary layers 204 are bonded to metal sleeves 198 through adhesive layers 206. Pins 196 extends through a hole such as 208 in metal sleeves 198, filamentary layers 204 as well as adhesive layers 206. Pins 196 also extends into a hole such as 210 of bulkhead 192 to mount rigidly bulkhead 192 within tube 194. The embodiment shown in Figures 11 and 12 is made by a fabrication process such as described above.

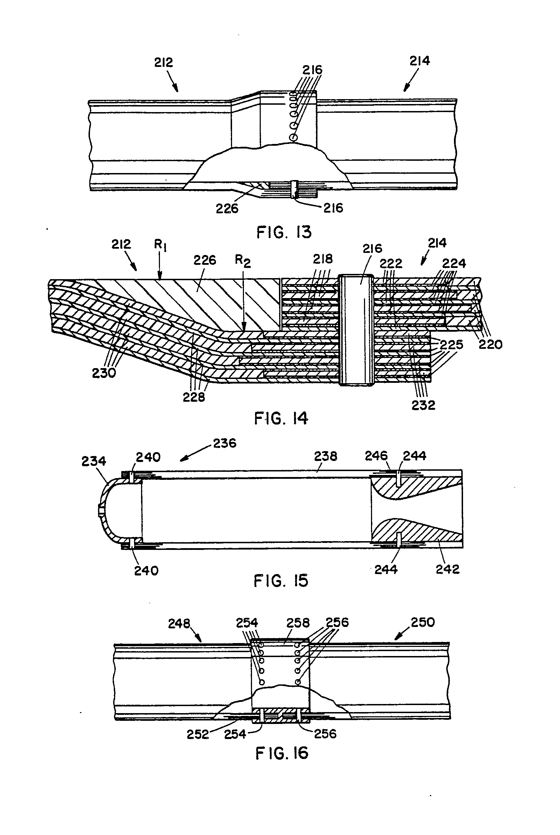

Figure 13 and Figure 14, a detail of Figure 13, shows joining of two tubes 212 and 214 together by means of a lap joint made in accordance with this invention. Connection of the ends of each tube is by pins 216 as shown or by bolts or rivets in and through the embedded shell zones of both tube ends. The end of tube 212 is enlarged outward to pass over the outside diameter of the other tube 214. Tube 214 is fabricated as described above. tube 214 has open ended, cylindrical metal sleeves 218, layers 220 of filaments in a hardened resin matrix that are circumferential, layers 222 of filaments in a hardened resin matrix that are relatively axial and adhesive layers 224.

Fabrication of tube 212 is facilitated by the insertion of a tapered, cylindrical spacer 226 on the filament winding mandrel together with a tool ring having the same diametrical dimensions of the spacer and extending into the region which is later occupied by the overlap of tube 212 over tube 214. Layers 228 and 230 of the tube 212 are filament wound; and metal sleeves 232 are embedded in adhesive layers 225 in the same manner as described above being also outward and over the spacer and tool ring. A limitation exists as to the maximum slope of the spacer 226 which can be filament wound and is a function of the ply helix angle. This function in terms of the slope axial length X is:

$$X_{minimum} = \frac{R_1}{R_2 \sin \alpha} \left[ R_2{}^2 - R_1{}^2 \right]^{1/2}$$

where $R_1$ is the inside radius of the tapered spacer 226 (such inner radius shown as $R_1$ in Figure 14) and $R_2$ is the outside radius of the taper spacer (such outer radius shown as $R_2$ in Figure 14) and $\alpha$ is the helic angle of the ply.

A primary advantage of this invention concerns the magnitude of load which can be transferred from or to the tube body through the shell embedded zone. This magnitude is equal to or greater than the maximum strength of the tube body owing to the multiplicity of shells each of which transfer load directly from or to each ply of the tube.

Another advantage concerns the use of metal shells which can be fusion or braze welded thereby having the advantages of lower cost and pressure sealing of the weld connection. The metal shells can also be pinned, bolted or riveted in the region of the extended shells or in the zone of the embedment thereby having the advantages of the very high bearing strength capability exhibited by metals.

Another advantage concerns the thickness of the entire joint region. The fusion welded joint and the pinned joint permit joining of two tubes without exceeding the outside diameter of the tube body. This has significant advantages to oil field tube applications such as drill stems, risers, production packers, and casings used in deep well drilling where flow rate is increased by internal diametral profile enlargement; and to rocket motor applications where aerodynamic performance is enhanced by external diametral profile reductions.

Many of the uses of this invention are discussed in the above. Figures 15 through 19 show still other uses and variations. Uses of the pin interlaminate joint connection in the zone of the embedment are shown by Figure 15 and 16. Figure 15 shows a tactical rocket motor: wherein the forward dome-shaped closure 234 is joined around forward cylindrical zone 236 to the rocket motor body 238 by pins 240 as shown or by bolts or rivets; and wherein the rocket nozzle 242 is joined to the body 238 by pins 244 in zone of embedment 246.

Figure 16 shows an interlaminate joint as would be employed in the connection of the tubes of large rocket motors or the connection of large size tubes, or pipes. In this use, each tube 248, 250 containing embedded shells in zone of embedment 252 is connected by pin rows 254, 256 as shown or by bolts or rivets through an intermediate fitting 258 which has both internal and external connection members. By this means the fasteners are loaded by double shear planes providing a more favorable bending load in the fastener as would be required for thicker walls of larger tubes.

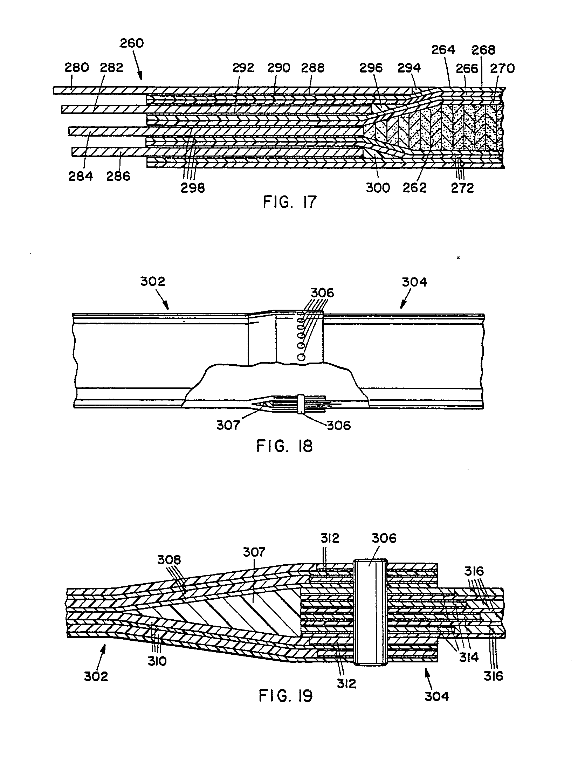

Figure 17 shows the tube end of an interlaminate tube body as used in joining composite tube wall 260 which is of sandwich construction. The core 262 being of honeycomb, foam or other suitable core material is contained between the inner sandwich skin layers 264 through 270 and the outer sandwich skin layers 272 of the tube body. The layers of both skins are taken around and between cylindrical metal sleeves 280 through 286 as illustrated.

The process of making the tube body 260 consists of three fabrication steps. The first step comprises the construction of the inner tube sandwich skin layers 264 through 270, together with the cylindrical metal sleeves 280 and 282, adhesive layers 288 through 292, and cylindrical filler wedges 294 and 296. In this first step, metal sleeve 280 having adhesive layer 288 applied to it, is positioned on a filament winding mandrel. This is followed by the circumferential filament winding of filler wedge 294 and then by filament winding of the first two tube body layers 264, 266, respectively. These layers are each first B-staged and then cut and the end material (axially away from the honeycomb location) of the filament wound layers is removed. The portion of the first step described to this point is repeated a number of times to construct the number of layers illustrated by Figure 17. The second step comprises the construction of the sandwich core. The second step is performed by: the laydown of expanded honeycomb core, containing tapered end rebates, around and fitted to layer 270; or by the spraying of expanded foam core material directly to layer 270. The third step comprises the construction of the outer tube sandwich skin layers 272 together with the cylindrical metal sleeves 284 and 286, adhesive layers 298, and cylindrical filler wedge 300. The process for this third step is the same as the first step described above. After completion, the entire assembly is heated to thermally cure the resin matrix. After cooling the mandrel is removed.

Figure 18 shows and Figure 19 details an interlaminate joint between tubes 302 and 304 as would be used in joining composite tubes of greater wall thicknesses by means of pins 306 as shown, or bolts or rivets. Tapered spacer 307 is used during manufacture of tube 302 to split the inner filamentary layers 308 and the outer filamentary layers 310 so as to load the pin 306 by double shear. Embedded cylindrical sleeves 312 are used accordingly to transfer loads between the pins 306 and tube layers 308. Similarly, shells 314 transfer loads to filamentary layers 316 in tube 304.

Definitions

Mandrel: A tool used in filament winding on which bands of fibers are deposited into particular filamentary patterns to form layers.

Filamentary Pattern: The geometric pattern formed by the filaments of a band being laid down on a mandrel along its center longitudinal axis.

Helix Angle: The geometric angle formed between the filament direction of bands and the center longitudinal axis of mandrel rotation, such angle being between about 5° and 75° in absolute value.

B-Stage: An intermediate state of a polymeric resinous material wherein the resin is highly immobile but not yet significantly crosslinked fully into a solid or hard state.

Cure: A state of a polymeric resinous material wherein the resin is crosslinked into a solid or hard state.

Filamentary materials: Fibers that are in the form of continuous filaments, examples of which are graphite fibers, carbon fibers, aramid fibers, glass fibers, or the like used in filament winding processes.

Relatively axially or helically positioned filamentary materials: Filamentary materials that with respect to a center longitudinal axis of a tube structure are at an angle between about 5° and 75° in absolute value.

Relatively circumferentially positioned filamentary materials: Filamentary materials that with respect to a center longitudinal axis of a tube structure are at an angle between about 80° and 90° in absolute value.

Layer of filaments or filamentary material: A group of continuous filaments disposed substantially at the same absolute angle relative to an axis or line parallel to an axis. Layer of filaments includes a ply or plies of such continuous filaments.

Adhesive: A polymeric resin preferably containing a thixotropic agent which is applied or used in a B-staged condition and which is cured to obtain a strong bond between adjacent parts or layers.

Load Bearing Shell: A metal or the like continuous sleeve which can transfer a load or portion of a load applied at a first location thereof to other locations within a composite tube that are in contact therewith.

Zone of Embedment: The tubular zone defined by the portion of composite tube that is commensurate with a hollow metal shell.

## Claims

1. A filament wound tube adapted to be joined to another body by means of an insert carried by the body of said filament wound tube, characterised in that said insert comprises a plurality of hollow, tubular load-bearing shells embedded between radially spaced layers of filament wound fiber, said shells having a longitudinal dimension less than that of said filament wound tube.

2. A filament wound tube according to claim 1, characterised by (a) a tubular, fibrous composite section of a first longitudinal dimension and (b) a tubular, fibrous composite and shell section of a second longitudinal dimension shorter than said first longitudinal dimension, said fibrous composite and shell section having a first end that integrates with said fibrous composite section around a centre longitudinal axis of said filament wound tube and a second end that is joinable to another body, said tube comprising:

first filamentary materials in a hardened resin matrix that are positioned relatively axially and relatively circumferentially relative to a said centre longitudinal axis in fibrous composite section layers of increasing radial dimension that are radially integral with one another axially along said fibrous composite section; and

second filamentary materials in a hardened resin matrix that are positioned relatively axially, circumferentially or axially and circumferentially relative to said centre longitudinal axis in fibrous composite and shell section layers that are radially spaced from each other axially along said fibrous composite and shell section, said second filamentary materials continuing integrally from said first filamentary materials through each juncture between said fibrous composite and fibrous composite and shell section layers.

3. A tube according to claim 2, characterised in that the hollow tubular load-bearing shells are respectively carried between radially adjacent pairs of said fibrous composite and shell section layers, each of said shells having a first shell end that abuts against a composite end of an intermediate layer of said fibrous composite section layers that is between a pair of said junctures that are radially adjacent each other.

4. A tube according to claim 2 or 3, characterised in that the load-bearing shells are of metal.

5. A tube according to claim 4, characterised by a plurality of fastening means spaced about said fibrous composite and shell section axially between said first ends of said shells and respective second ends thereof, said fastening means extending through said shells and said fibrous composite and shell section layers for connecting said tube to another body.

6. A tube according to claim 2, 3 or 4, characterised in that each shell has a second shell end, integral with said first shell end, axially extending from said fibrous composite and shell section away from said fibrous composite section.

7. A tube according to claim 6, characterised in that said second shell ends terminate in a welding zone for welding said tube to another tube.

8. A tube according to claim 7, characterised by hollow tubular spacers respectively carried between radially adjacent pairs of said hollow tubular shells, each of said spacers having a first spacer end that abuts against a composite end of an intermediate layer of said fibrous composite and shell section layers that is between a pair of said shells that are radially adjacent each other and a second end axially extending with said second shell end to said welding zone.

9. A tube according to claim 2, characterised by hollow tubular load-bearing shells respectively carried between radially adjacent pairs of said fibrous composite and shell section layers, each of said shells having a first shell end that abuts against a cylindrical spacer spacing said fibrous composite section layers that are radially adjacent each other at each said juncture and a second shell end, integral with said first shell end, axially extending from said fibrous composite and shell section away from said fibrous composite section.

10. A tube according to claim 7 or 8, characterised in that each first shell end abuts cylindrically against a said composite end.

11. A tube according to claim 6, characterised in that the said second shell ends are adapted to interengage with the ends of shells extending from another tube, whereby the two tubes may be joined by fastening means extending through the interengaged shells.

12. A tube according to claim 2, 3, 4 or 5, modified in that the said second end of the fibrous composite and shell section integrates with a further fibrous composite section.

## Patentansprüche

1. Fasergewickelte Röhre, die daran angepaßt ist, daß sie an einen anderen Körper mit Hilfe eines Einsatzes, der von dem Körper der fasergewickelten Röhre getragen wird, verbunden werden kann, dadurch gekennzeichnet, daß der Einsatz eine Vielzahl von hohlen, röhrenförmigen, Last-tragenden Ummantelungen umfaßt, die zwischen radial angeordneten Schichten von in Wickeltechnik hergestellten Fasern eingebettet sind, wobei diese Ummantelungen eine Längsabmessung haben, die geringer ist, als die der fasergewickelten Röhre.

2. Fasergewickelte Röhre nach Anspruch 1, gekennzeichnet, durch

(a) ein röhrenförmiges, faserartiges Schichtkörper - Teilstück einer ersten Längsabmessung und

(b) ein röhrenförmiges, faserartiges Schichtkörper- und Ummantelungs - Teilstück einer zweiten Längsabmessung, die kürzer ist als die erste Längsabmessung, wobei das faserartige Schichtkörper- und Ummantelungs - Teilstück ein erstes Ende, das mit dem faserartigen Schichtkörper - Teilstück um eine zentrale Längsachse der fasergewickelten Röhre herum zusammenhängt, und ein zweites Ende, das mit einem anderen Körper verbindbar ist, hat, wobei die Röhre umfaßt:

erste faserartige Materialien in einer gehärteten Harzmatrix, die relativ axial und relativ dem Umfang entsprechend bezogen auf die zentrale Längsachse in faserartigen Schichtkörper - Teilschichten von ansteigender radialer Größe angeordnet sind, die radial miteinander in axialer Richtung entlang dem faserartigen Schichtkörper - Teilstück verbunden sind, und

zweite faserartige Materialien in einer gehärteten Harzmatrix, die relative axial, dem Umfang entsprechend oder axial und dem Umfang entsprechend bezogen auf die zentrale Längsachse in faserartigen Schichtkörper- und Ummantelungs - Teilschichten angeordnet sind, die radial voneinander getrennt axial entlang des faserartigen Schichtkörper- und Ummantelungs - Teilstücks angeordnet sind, wobei sich die zweiten faserartigen Materialien in einem Stück von den ersten faserartigen Materialien über jede Verbindungsstelle zwischen den faserartigen Schichtkörper- und den faserartigen Schichtkörper- und Ummantelungs - Teilschichten erstrecken.

3. Röhre nach Anspruch 2, dadurch gekennzeichnet, daß die hohlen, röhrenförmigen, Lasttragenden Ummantelungen entsprechend zwischen radial benachbarten Paaren von faserartigen Schichtkörper- und Ummantelungs - Teilschichten getragen werden, wobei jede der Ummantelungen ein erstes Ummantelungsende hat, das an ein Shichtkörperende einer Zwischenschicht der faserartigen Schichtkörper - Teilschichten anstößt, das zwischen einem Paar der Verbindungsstellen ist, die radial einander benachbart sind.

4. Röhre nach Anspruch 2 oder 3, dadurch gekennzeichnet, daß die Last-tragenden Ummantellunge aus Metall sind.

5. Röhre nach Anspruch 4, gekennzeichnet durch eine Vielzahl von Befestigungsmitteln, die über das faserartige Schichtkörper- und Ummantelungs - Teilstück axial zwischen den ersten Enden der Ummantelungen und den entsprechenden zweiten Enden davon angeordnet sind, wobei sich die Befestigungsmittel durch die Ummantelungen und die faserartigen Schichtkörper- und Ummantelungs - Teilschichten zur Verbindung der Röhre mit einem anderen Körper erstrecken.

6. Röhre nach Anspruch 2, 3 oder 4, dadurch gekennzeichnet, daß jede Ummantelung ein zweites Ummantelungsende hat, das mit dem ersten Ummantelungsende durchgehend zusammenhängt, das sich axial von dem faserartigen Schichtkörper- und Ummantelung - Teilstück weg von dem faserartigen Schichtkörper - Teilstück erstreckt.

7. Röhre nach Anspruch 6, dadurch gekennzeichnet, daß die zweiten Ummantelungsenden in einer Schweißzone zum Verschweißen der Röhre mit einer anderen Röhre endet.

8. Röhre nach Anspruch 7, gekennzeichnet durch hohle, röhrenförmige Abstandhalter, die entsprechend zwischen radial benachbarten Paaren der hohlen, röhrenförmigen Ummantelungen getragen werden, wobei jeder der Abstandhalter ein erstes Ende des Abstandhalters, das an ein Schichtkörperende einer Zwischenschicht der faserartigen Schichtkörper- und Ummantelungs - Teilschichten anstößt, das zwischen einem Paar der Ummantelungen ist, die einander radial benachbart sind und ein zweites Ende, das sich axial mit dem zweiten Ende der Ummantelung zu der Schweißzone erstreckt, hat.

9. Röhre nach Anspruch 2, gekennzeichnet, durch höhle, röhrenförmige, Last-tragende Ummantelungen, die entsprechend zwischen radial benachbarten Paaren der faserartigen Schichtkörper- und Ummantelungs - Teilschichten getragen werden, wobei jede der Ummantelungen ein erstes Ummantelungsende, das gegen einen zylinderförmigen Abstandshalter stößt, der die faserartigen Schichtkörper- Teilschichten auseinanderhält, die radial einander an jeder Verbindungsstelle benachbart sind, und ein zweites Ummantelungsende hat, das mit dem ersten Ummantelungsende durchgehend zusammenhängt, die sich axial aus dem faserartigen Schichtkörper- und Ummantelungs - Teilstück weg von dem faserartigen Schichtkörper - Teilstück erstrecken.

10. Röhre nach Anspruch 7 oder 8, dadurch gekennzeichnet, daß jedes erste Ende der Ummantelung zylinderförmig gegen ein Ende eines Schichtkörpers stößt.

11. Röhre nach Anspruch 6, dadurch gekennzeichnet, daß die zweiten Enden der Ummantelungen daran angepaßt sind, daß sie mit den Enden von Ummantelungen zusammenpassen, die sich von einer anderen Röhre erstrecken, wobei die beiden Röhren durch Begestigungsmittel verbunden werden können, die sich durch die zusammenpassenden Ummantelungen erstrecken.

12. Röhre nach Anspruch 2, 3, 4 oder 5, dahingehend verändert, daß das zweite Ende des faserartigen Schichtkörper- und Ummantelungs - Teilstückes mit einem weiteren faserartigen Schichtkörper - Teilstück durchgehend zusammenhängt.

**Revendications**

1. Tube réalisé par enroulement de filaments et pouvant être assemblé à un autre corps au moyen d'un élément inséré porté par le corps dudit tube réalisé par enroulement de filaments, caractérisé en ce que ledit élément inséré comprend plusieurs enveloppes creuses tubulaires supportant des charges et intercalées entre des couches de fibres réalisées par enroulement de filaments espacées dans le sens radial, lesdites enveloppes ayant une longueur inférieure à celle dudit tube réalisé par enroulement de filaments.

2. Tube réalisé par enroulement de filaments suivant la revendication 1 caractérisé en ce qu'il comprend a/un segment tubulaire composite formé de fibres et ayant une première longueur et b/ un segment tubulaire composite formé de fibres et d'enveloppes et ayant une deuxième longueur inférieure à ladite première longueur, ledit segment composite formé de fibres et d'enveloppes comportant une première extrémité qui se raccorde audit segment composite formé de fibres, autour d'un axe longitudinal central dudit tube réalisé par enroulement de filaments, et une deuxième extrémité qui peut être assemblée à un autre corps, ledit tube comprenant:

des premiers matériaux constitués par des filaments associées à une matrice de résine durcie qui sont disposés dans des positions relatives axiales, périphériques ou axiales et périphériques par rapport audit axe longitudinal central de manière à constituer des couches de segment composite formées de fibres, de dimension radiale croissante, les couches de même dimension radiale se raccordant les unes aux autres dans le sens axial sur toute la longueur du segment composite formé de fibres,

des deuxième matériaux constitués par des filaments associés à une matrice de résine durcie qui sont disposés dans des positions relatives axiales, périphériques ou axiales et périphériques par rapport audit axe longitudinal central de manière à constituer des couches de segment composite formé de fibres et d'enveloppes, qui sont espacées dans le sens radial sur toute la longueur dans le sens axial du segment composite formé de fibres et d'enveloppes, lesdits deuxièmes matériaux constitués par des filaments se raccordant sans interruption auxdits premiers matériaux constitués par des filaments au travers de chacun des joints situés entre lesdites couches composites de fibres et les couches composites formées de fibres et d'enveloppes.

3. Tube suivant la revendication 2 caractérisé en ce que les enveloppes creuses tubulaires supportant des charges sont respectivement intercalées chacune entre deux couches voisines dans le sens radial, de segment composite formé de fibres et d'enveloppes, chacune desdites enveloppes comportant une première extrémité d'enveloppe qui s'applique bout à bout contre une extrémité composite d'une couche intermédiaire desdites couches du segment composite formé de fibres qui se trouve entre deux joints contigus l'un à l'autre dans le sens radial.

4. Tube suivant l'une quelconque des revendications 2 ou 3 caractérisé en ce que les enveloppes supportant les charges sont en métal.

5. Tube suivant la revendication 4 caractérisé en ce qu'il comporte plusieurs dispositifs de fixation espacés autour dudit segment composite formé de fibres et d'enveloppes, intercalés dans le sens axial entre lesdites premières extrémités desdites enveloppes et les deuxièmes extrémités correspondantes de ces enveloppes, ces dispositifs de fixation traversant lesdites enveloppes et les dites couches de segment composite formé de fibres et d'enveloppes pour assurer l'assemblage du tube à un autre corps.

6. Tube suivant l'une quelconque des revendications 2, 3 ou 4 caractérisé en ce que chaque enveloppe a une deuxième extrémité d'enveloppe qui se raccorde à ladite première extrémité d'enveloppe et s'étend dans le sens axial depuis ledit segment composite formé de fibres et d'enveloppes en s'écartant dudit segment composite formé de fibres.

7. Tube suivant la revendication 6 caractérisé en ce que lesdites deuxièmes extrémités d'enveloppes se terminant par une zone de soudage pour le soudage du tube à un autre tube.

8. Tube suivant la revendication 7 caractérisé en ce qu'il comporte des pièces creuses tubulaires de maintien à distance intercalées chacune entre deux desdites enveloppes creuse tubulaires, chacune de ces pièces de maintien à distance comportant une première extrémité de pièce de maintien à distance qui s'applique bout à bout contre l'extrémité composite d'une couche intermédiaire dans les couches du dit segment formé de fibres et d'enveloppes, intercalée entre deux desdites enveloppes qui sont contiguës l'une à l'autre dans le sens radial et une deuxième extrémité qui s'étend dans le sens axial, avec ladite deuxième extrémité d'enveloppe, jusqu'à ladite zone de soudage.

9. Tube suivant la revendication 2 caractérisé en ce qu'il comporte des enveloppes creuses tubulaires supportant des charges et intercalées chacune entre deux couches contiguës entre elles, dans le sens radial, desdites couches de segment composite formé de fibres et d'enveloppes, chacune de ces enveloppes comportant une première enveloppe qui s'applique bout à bout contre une pièce cylindrique de maintien à distance qui maintient à distance les unes des autres les couches de segment composite formé de fibres qui sont contiguës les unes aux autres dans le sens radial au niveau de chaque joint et une deuxième extrémité d'enveloppe qui se rattache dans interruption à ladite première extrémité d'enveloppe et s'étend dans le sens radial depuis le segment composite formé de fibres et d'enveloppes en s'écartant du segment composite formé de fibres.

10. Tube suivant l'une quelconque des revendications 7 ou 8 caractérisé en ce que chaque première extrémité d'enveloppe vient s'appliquer dans le sens périphérique contre une extrémité composite.

11. Tube suivant la revendication 6 caractérisé en ce que lesdites deuxièmes extrémités d'enveloppes sont réalisées de manière à s'imbriquer avec les extrémités d'enveloppe s'étendant à partir d'un autre tube, les deux tubes pouvant être assemblés au moyen de dispositifs de fixation traversant les enveloppes imbriquées.

12. Tube suivant l'une quelconque des revendications 2, 3, 4 ou 5 caractérisé en ce qu'il est modifié en ce sens que la deuxième extrémité du segment composite formé de fibres et d'enveloppes se raccorde sans interruption à un autre segment composite formé de fibres.

FIG. 1

FIG. 2

FIG. 3

FIG. 4

134    136

138

FIG. 5

146 140 142    150 148    154

144    152

146    138    154

134    FIG. 6    136

156    158

164

164

FIG. 7

156    164    158

160    162

FIG. 8

FIG. 9

FIG. 10

FIG. 11

FIG. 12

FIG. 13

FIG. 14

FIG. 15

FIG. 16

FIG. 17

FIG. 18

FIG. 19

5